# EUROPÄISCHE PATENTANMELDUNG

(11) **EP 3 171 063 A1**
(43) Veröffentlichungstag der Anmeldung: **24.05.2017**
(21) Anmeldenummer: 15195538.2
(22) Anmeldetag: 20.11.2015
(51) Int. Cl.: F16K 31/524, F16K 51/02

(54) **VAKUUMECKVENTIL MIT KULISSENANTRIEB**

(71) Anmelder: VAT Holding AG, 9469 Haag (CH)
(72) Erfinder: Steffen, Roman, CH-9445 Rebstein (CH); Vogt, Thomas, FL-9496 Balzers (LI); Bless, Roger, CH-8890 Flums (CH)
(74) Vertreter: Kaminski Harmann

(57) **Zusammenfassung**

Ventil (10) zum im Wesentlichen gasdichten Unterbrechen eines Fliesswegs, mit einem Ventilgehäuse (11), das einen ersten Anschluss (12) in Richtung einer ersten Achse, einen zweiten Anschluss in Richtung einer zweiten Achse und einen Ventilsitz, welcher den ersten Anschluss (12) umschliesst und in dem Fliessweg eines Fliessraums, angeordnet ist, aufweist; zudem mit einem Ventilteil (17), das entlang einer Bewegungsachse (18) senkrecht zu einer Fläche des Ventilsitzes derart verschiebbar ist, dass eine dem Ventilsitz zugewandte Verschlussfläche des Ventilteils (17) zum Unterbrechen des Fliesswegs mit dem Ventilsitz in Kontakt bringbar und zum Freigeben des Fliesswegs ausser Kontakt bringbar ist. Das Ventil weist ausserdem eine motorisierte Antriebseinheit zur Bereitstellung einer Verschiebung des Ventilteils (17) auf. Das Ventilteil (17) weist eine Ventilstange (15) mit einem Kontaktelement (16), die Antriebseinheit eine Führungsmechanik (23) mit einem um eine Stellachse drehbar gelagerten Stellelement (25) auf, wobei das Stellelement (25) um die Stellsachse gesteuert drehbar angeordnet ist und durch seine Form eine äussere Spur definiert, deren Abstand zur Stellachse in einem bestimmten Drehwinkelbereich variiert. Der Abstand der Spur zur Stellachse ist durch eine Drehung des Stellelements (25) um die Stellachse einstellbar. Die Antriebseinheit und das Ventilteil sind so angeordnet, dass das Kontaktelement (16) und die Führungsmechanik (23) so zusammenwirken, dass mittels einer Drehung des Stellelements (25) das Ventilteil (17) so bewegbar ist, dass dadurch das Unterbrechen bzw. das Freigeben des Fliesswegs bereitstellbar ist.

## Beschreibung

Die vorliegende Erfindung betrifft einen Antrieb für ein Ventil zum im Wesentlichen gasdichten Unterbrechen eines Fliesswegs zwischen zwei eckförmig angeordneten Anschlüssen nach dem Oberbegriff des Anspruchs 1. Derartige Ventile werden vor allem in der Vakuumtechnik verwendet und insbesondere als Vakuum-Eckventil bezeichnet.

Ventile der eingangs genannten Art sind in unterschiedlichen Ausführungsformen aus dem Stand der Technik bekannt. Vakuumventile kommen insbesondere im Bereich der IC- und Halbleiterfertigung, die in einer geschützten Atmosphäre möglichst ohne das Vorhandensein verunreinigender Partikel stattfinden muss, zum Einsatz.

Ein aus dem Stand der Technik bekanntes und beispielsweise in dem U.S. Patent 6,772,989 beschriebenes Ventil weist einen Ventilkörper mit zwei in einer Richtung senkrecht zueinander angeordneten Anschlüsse, einen in einem die beiden Anschlüsse verbindenden Fliessweg im Fliessraum angeordneten Ventilsitz und eine dem Ventilsitz gegenüberliegende Öffnung auf. In einem die Öffnung verschliessenden Ventildeckel ist ein Kolben eines pneumatischen Zylindersystems angeordnet, welcher über eine Ventilstange einen Ventilteller, der den Ventilsitz öffnet und schliesst, antreibt. Der Ventildeckel ist durch eine Balgplatte gasdicht an der Öffnung angebracht. Eine Rückstellfeder zwischen dem Ventilteller und dem Ventildeckel wird beim Öffnen des Ventilsitzes zusammengedrückt, so dass das Ventil per Federkraft schliesst. Der Ventildeckel verfügt über einen Anschluss, welcher Pressluft in eine sich balgplattenseitig befindende Druckkammer, die durch den Kolben begrenzt wird, zu- und abführt. Die beiden Enden eines Balgs, der die Ventilstange umgibt, sind gasdicht an der inneren Randfläche der Balgplatte und am Ventilteller befestigt. Der Ventilteller weist an der dem Ventilsitz zugewandten Fläche eine ringförmige Halterungsnut auf, in welcher ein Dichtring angeordnet ist.

Das Ventilgehäuse ist in der Regel aus Aluminium oder Edelstahl gefertigt, oder mit Aluminium oder einem anderen geeigneten Material innen beschichtet, während der Ventilteller und der Balg meist aus Stahl bestehen. Der in seiner Längsachse innerhalb des Bereichs des Verstellwegs des Tellers ausdehnbare und zusammendrückbare Balg dichtet den Fliessraum luftdicht von der Rückstellfeder, der Ventilstange und der Druckkammer ab. Zur Anwendung kommen vor allem zwei Typen von Bälgen. Einerseits der Membranbalg, andererseits der Wellenbalg, welcher letzterer sich gegenüber dem Membranbalg dadurch auszeichnet, dass er keine Schweissnähte aufweist und leichter gereinigt werden kann, jedoch einen geringeren maximalen Hub aufweist.

Solche aus dem Stand der Technik bekannten Ventile haben insbesondere den Nachteil, dass das im Fliessraum das Ventil durchströmende Gas unterschiedlichen Materialen ausgesetzt ist, insbesondere einerseits dem Aluminium des Ventilgehäuses, andererseits dem Stahl des Balgs und des Tellers. Bei zahlreichen Gasen kann es zu einer Reaktion zwischen dem Gas und dem Material des Ventils kommen, so dass es gewünscht wird, möglichst nur ein einziges Material im Fliessraum des Ventils einzusetzen. Bei manchen Prozessen ist die Präsenz von Stahl gänzlich unerwünscht. Somit wird angestrebt, ein Ventil der eingangs genannten Art zur Verfügung zu stellen, in dessen Fliessraum im Wesentlichen ausschliessliche Aluminium oder ein anderes für den jeweiligen Prozess geeignete Material zum Einsatz kommt. Insbesondere Aluminium eignet sich jedoch kaum zur Herstellung eines weit expandierbaren Balgs.

Aus der WO 2006/045317 A1 ist ein weiteres Eckventil bekannt, welches einen manuell betreibbaren Mechanismus zum Öffnen und Schliessen des Ventils aufweist. Ein um beispielsweise 180° drehbarere Hebel ragt aus dem Inneren des Mechanismus heraus und ist mit einer ebenso drehbar gelagerten inneren Kulisse verbunden. Durch das Bewegen des Hebels und ein Zusammenwirken der Kulisse mit einem dieser Kulisse folgenden Element ist das Öffnen und Schliessen des Ventils umsetzbar. Das System weist bedingt durch seine spezifische Konstruktion einen vergleichsweise grossen Bereich auf, der eine Verbindung der inneren Mechanik mit der Umwelt darstellt (Schlitz im Gehäuse zur Bewegung des Hebels).

Als grosser Nachteil einer solchen Konstruktion und für in der Vakuumtechnik verwendete Systeme allgemein ist damit die Anfälligkeit dieser Kulissenmechanik für Verunreinigungen oder anderweitige Umwelteinflüsse (z.B. Entstehung oder Verteilung von Partikeln, Eindringen von Feuchtigkeit in die Mechanik etc.) und eine dadurch verursachte Beeinträchtigung, insbesondere Langzeitbeeinträchtigung, der verlässlichen Funktionsweise des Ventils.

Ein weiterer Nachteil dieses Systems ist die durch die verwirklichte Bedienbarkeit bedingte mangelnd präzise Steuerbarkeit der Stellung des Ventilverschlusses. Hier bleibt es allein dem Geschick eines Benutzers überlassen, wie zum einen genau ein Volumenstrom durch das Ventil gesteuert werden kann und zum zweiten wie schnell und angepasst auf einen Prozess ein Schliessen oder Öffnen des Ventil erfolgt.

Dabei ist beispielsweise ein gesteuertes Öffnen und Schliessen eines solchen Ventils im Rahmen eines Produktionsprozesses erwünscht, wodurch eine Zustandsänderung des Ventils (geöffnet/geschlossen) zeitlich abgestimmt mit einem Be- oder Entladen einer Prozesskammer erfolgen kann.

Durch eine solche abgestimmte Steuerung könnte eine signifikante Zeitersparnis und somit ein deutlich effizienterer Prozess erreicht werden.

Aufgabe der Erfindung ist es daher, ein verbessertes Eckventil für den Einsatz im Vakuumbereich bereitzustellen, welches oben genannte Nachteile überwindet.

Im Speziellen ist es eine Aufgabe der Erfindung ein solches Vakuum-Eckventils anzugeben, welches im Fall einer tatsächlich entstehenden Funktionsbeeinträchtigung ein schnelles und einfaches Ersetzen der Antriebsmechanik zulässt, insbesondere ohne Eingriff in den Fliessraum oder das Innere des Ventils, oder eine Anfälligkeit für eine solche Beeinträchtigung zumindest vermindert.

Weiterhin ist es eine Aufgabe ein präziser oder angepasster (auf einen Produktionsprozess) steuerbares Eckventil der oben angegebenen Gattung bereitzustellen.

Diese Aufgaben werden durch die Verwirklichung der kennzeichnenden Merkmale des unabhängigen Anspruchs gelöst. Merkmale, die die Erfindung in alternativer oder vorteilhafter Weise weiterbilden, sind den abhängigen Patentansprüchen zu entnehmen.

Das erfindungsgemässe Ventil zum im Wesentlichen gasdichten Unterbrechen eines Fliesswegs besitzt ein Ventilgehäuse, das einen ersten Anschluss in Richtung einer ersten Achse und einen zweiten Anschluss in Richtung einer im Wesentlichen senkrecht zu der ersten Achse verlaufenden zweiten Achse aufweist, so dass die beiden Anschlüsse rechtwinklig und eckförmig zueinander positioniert sind. Die Achsen der Anschlüsse werden beispielsweise durch deren Längsverlauf, den Verlauf eines angeordneten Stutzens oder durch die Einlassflächen in den Fliessraum definiert. Die Anschlüsse haben beispielsweise einen kreisförmigen Querschnitt. Der erste Anschluss wird von einem Ventilsitz umschlossen, der in dem Fliessweg des Fliessraums, der den ersten Anschluss und den zweiten Anschluss miteinander verbindet, angeordnet ist. Der Fliessraum ist derjenige Abschnitt des Ventils, der im geschlossenen oder geöffneten Zustand des Ventils, zumindest von einem der beiden Anschlüsse aus, mit Gas flutbar ist.

Das Ventil besitzt ausserdem ein Ventilteil, z.B. einen zylindrischen Kolben, das zumindest teilweise innerhalb des Fliessraums entlang einer Bewegungsachse senkrecht zu einer Fläche des Ventilsitzes um einen Verstellweg axial geführt verschiebbar ist. Diese Bewegungsachse entspricht im Wesentlichen der ersten Achse. Es ist jedoch alternativ möglich, dass die Achse in eine geringfügig andere Richtung verläuft. Durch Verschieben des Teils kann eine dem Ventilsitz zugewandte, insbesondere einen ersten Dichtungskörper - beispielsweise in Form eines in einer Befestigungsnut befindlichen O-Rings - aufweisende Verschlussfläche des Teils mit dem Ventilsitz in Kontakt gebracht oder ausser Kontakt gebracht werden. Hierdurch wird der Fliessweg entweder im Wesentlichen gasdicht unterbrochen oder freigegeben. Die Verschlussfläche wird von der Stirnfläche des Ventilteils gebildet. Die Verschlussfläche und die Fläche des Ventilsitzes sind derart ausgebildet, dass sie aufeinander zum Liegen kommen können. Bevorzugt verläuft die Bewegungsachse des Ventilteils senkrecht zu beiden Flächen. Es ist jedoch alternativ möglich, dass die beiden Flächen schräg oder uneben ausgestaltet sind. In diesem Fall sind unter der Verschlussfläche und der Fläche des Ventilsitzes virtuelle, gemittelte Flächen zu verstehen, zu denen die Achse senkrecht verläuft.

Ein Vorteil des erfindungsgemässen Ventils besteht darin, dass unmittelbar an den Fliessraum des Ventils im Wesentlichen nur das Ventilgehäuse und das Ventilteil (der Kolben) angrenzen. Da dem das Ventil durchflutenden Medium wie z.B. Gas somit lediglich die glatt ausbildbare Verschlussfläche, die glatt ausbildbare Aussenfläche des Ventilteils und die Innenfläche des Ventilgehäuses ausgesetzt sind, neigt das Ventil kaum zur Verschmutzung und eine mögliche Reaktionsfläche für das Gas ist gering. Das Ventilteil ist insbesondere aus Aluminium oder einem sonstigen geeigneten Material herstellbar, so dass es möglich ist, im Fliessraum nur ein einziges Material zu verwenden. Somit sinkt die Gefahr ungewollter Reaktionen zwischen einem Ventilbauteil und dem Gas. Weiters ist der Anteil des ummittelbar am Durchfluss beteiligten Volumens des Fliessraums verhältnismässig gross, so dass die Strömungsverluste gering sind.

Das Ventil verfügt zudem über eine motorisiert betriebene Antriebseinheit, zur Verschiebung des Ventilteils entlang der Bewegungsachse. So kann ein Öffnen und Schliessen des Ventils mittels einer definierten Ansteuerung der Antriebseinheit kontrolliert und dadurch präzise ausgeführt werden.

Das Ventilteil (z.B. der Kolben) weist ausserdem eine Ventilstange mit einem an der Ventilstange angeordneten Kontaktelement, beispielsweise ein Zapfen oder Bolzen, auf. Die Ventilstange bildet insbesondere ein Verbindungsstück zwischen dem die Ventilfunktion bereitstellenden und beweglichen Ventilteil und der Antriebseinheit. Durch eine solche Kopplung kann nunmehr die gesteuerte Bewegung der Antriebseinheit in eine kontrollierbare Bewegung des Ventilteils umgesetzt werden.

Für eine entsprechende Umsetzung der Bewegung der Antriebseinheit weist diese ein um eine Stellachse drehbar gelagertes Stellelement, z.B. eine Kurvenscheibe, auf. Das Stellelement ist gesteuert motorisiert um die Stellachse drehbar angeordnet und definiert durch seine Form eine äussere Spur, deren Abstand zur Stellachse innerhalb eines bestimmten Drehwinkelbereichs variiert.

Durch eine solche Anordnung wird der Abstand der Spur zur Stellsachse bezüglich eines bestimmten Referenzwinkels bezüglich der Stellachse, d.h. bezüglich einer bestimmten Winkelstellung relativ zur Stellachse, durch eine Drehung des Stellelements in eine bestimmte Drehwinkelstellung um die Stellachse variable einstellbar.

Zur Bereitstellung einer definierten und steuerbaren Beweglichkeit des Ventilteils sind die Antriebseinheit und das Ventilteil derart relativ zueinander angeordnet, dass das Kontaktelement der Ventilstange und das Führungselement der Antriebseinheit derart zusammenwirken, dass mittels einer Drehung des Stellelements um die Antriebsachse das Ventilteil so bewegbar ist, dass dadurch das Unterbrechen bzw. das Freigeben des Fliesswegs bereitstellbar ist.

Entsprechend einer bevorzugten Ausführungsform der Erfindung wird bei der Drehung des Stellelements die Drehbewegung des Stellelements in eine Linearbewegung des Ventilteils transformiert. Eine solche Transformation erfolgt unabhängig von der Drehrichtung des Stellelements, sodass eine entsprechende lineare Bewegung des Ventilteils dadurch ebenso in zwei Richtungen (eine Linearrichtung für jede Drehrichtung) erzeugbar ist.

Insbesondere weist die Führungsmechanik ein Führungselement auf, welches derart ausgebildet und relativ zum Stellelement angeordnet ist, dass eine Drehbewegung des Stellelements in eine Linearbewegung des Führungselements transformiert wird. Das Führungselement kann hierfür eine Kulisse aufweisen, wobei die Kulisse die Stellachse umschliesst, und das Führungselement zusammen mit dem Stellelement einen Kulissenantrieb um die Stellachse bildet.

Ferner kann das Führungselement als zumindest eine Führungsplatte mit einer die Kulisse verkörpernden länglichen Ausnehmung und einem mit dem Stellelement mechanisch zusammenwirkenden Führungssteg ausgebildet sein.

Gemäss einer bestimmten Ausführungsform weist die Führungsmechanik das als flache Kurvenscheibe ausgebildete Stellelement und ein aus zwei Platten bestehendes Führungselement auf. Das Stellelement ist zwischen den parallel angeordneten Platten ebenfalls parallel angeordnet. Die Stellachse erstreckt sich sowohl durch das Stellelement als auch durch die jeweils längliche Ausnehmung der beiden Führungsplatten. Die Führungsplatten sind somit im Rahmen der Dimension und Form der Ausnehmungen relativ zur Stellachse beweglich. Beide Platten sind durch einen Führungssteg verbunden. Der Steg erstreckt sich zudem in eine oder beidseitige Ausnehmungen in dem Gehäuse der Führungsmechanik, wobei diese Ausnehmungen bezüglich ihrer länglichen Erstreckung im Wesentlichen den Ausnehmungen der beiden Platte entsprechen. Auf diesen Steg wird mittel Drehung des Stellelements eine Kraft ausgeübt, d.h. die Kurvenscheibe kontaktiert den Steg. Zudem sind die Führungsplatten mit dem Kontaktelement (Zapfen) der Ventilstange verbunden. Somit liegen die Platten in einer fixen Lage relativ zueinander und durch die Ausnehmungen und den Steg definiert beweglich vor. Sind die Ausnehmungen der Platten länglich und deren Breite entsprechend dem Durchmesser der Stellachse ausgebildet, so bleibt als einzig mögliche Bewegung für das Führungselement eine lineare Bewegung. Eine solche Führungsmechanik mit einer entsprechenden Antriebseinheit kann als Kulissenantrieb verstanden werden, wobei die Kulisse durch erwähnte Ausnehmungen bereitgestellt ist.

Hinsichtlich der Ausgestaltung des Stellelements sind unterschiedliche Formen und Dimensionen hierfür denkbar. Gemeinsam haben diese, dass durch eine Drehung des Stellelements ein lineares Verschieben eines Führungselements bereitgestellt ist. Insbesondere kommen hierfür flache, exzentrisch gelagerte, bezüglich einer Projektion der Oberfläche kantenlose Objekte in Frage - beispielsweise ein ellipsenförmiger Körper, der in und um einen seiner Brennpunkte drehbar gelagert ist.

Gemäss einer bestimmten Ausführungsform definiert die äussere Spur des Stellelements bezüglich des Referenzwinkels, also bezüglich einer festen Bezugsrichtung, einen drehwinkelabhängigen Abstand der Stellachse zu einer Kante (= Rand der für die erzeugbare Abstandsänderung relevanten Oberfläche) des Stellelements.

Die Spur kann zumindest teilweise eine definierte Steigung aufweisen, insbesondere wobei der Abstand der Spur zur Stellachse bezüglich gleicher Drehwinkelbereiche gleich stark variiert. Dadurch kann mittels eines kontinuierlichen Drehens des Stellelements eine ebenso kontinuierliche Linearbewegung des Führungselements umgesetzt werden.

Die Form des Stellelements kann auch derart gestaltet sein, dass bei einer Drehung des Elements in eine Richtung nicht ausschliesslich eine Zunahme oder Abnahme des Abstands stattfindet, sondern dabei auch bei Drehung der Abstand gleich bleibt oder entgegen der vorherigen Zunahme wieder abnimmt bzw. umgekehrt zunimmt. Auch kann eine Variation der Abstandsänderung über einen Drehwinkel definiert sein.

Gemäss einer weiteren Ausführungsform ist der Abstand für eine erste Drehwinkelstellung (α) des Stellelements minimal und der Abstand für eine zweite Drehwinkelstellung (β) maximal, wobei zwischen erster und zweiter Drehwinkelstellung ein Drehwinkelunterschied von mindestens 90°, insbesondere mindestens 180° oder mindestens 360°, besteht. In Abhängigkeit der Ausformung des Stellelements kann für eine Veränderung von dem minimalen zum maximalen Abstand eine Drehung des Elements von insbesondere 540° oder mehr erforderlich sein.

Betreffend die Ausgestaltung des Stellelements kann dieses als Kurvenscheibe ausgebildet sein, wobei deren Oberflächenbegrenzungslinien zumindest teilweise einen bezüglich einer Drehung der Kurvenscheibe in eine erste Drehrichtung um die Stellachse im Wesentlichen zunehmenden Abstand zu der Stellachse beschreibt. Die Kurvenscheibe kann strukturell insbesondere schneckenförmig ausgebildet sein.

Ferner kann die äussere Spur zumindest teilweise spiralmässig verlaufen und sich über einen Drehwinkelbereich von zumindest, insbesondere mehr als, 360° erstrecken. Dadurch kann die Spiralform z.B. derart eng ausgeführt sein, dass eine Änderung von einer Geschlossenstellung des Ventilteils hin zu einer maximalen Offenstallung des Ventilteils mehrfache Umdrehungen des Stellelements erfordert und dabei das Kontaktelement fortlaufend linear in eine Richtung geschoben oder gezogen wird.

Gemäss einer spezifischen Ausgestaltung der Erfindung ist die Stellachse durch eine Antriebsachse der Antriebseinheit verkörpert ist und das Stellelement um die Antriebsachse drehbar gelagert. D.h. das Stellelement wird direkt durch eine Drehbewegung der Antriebswelle entsprechend mitbewegt (um jeweils gleiche Winkel).

Alternativ hierzu kann die Stellachse z.B. parallel versetzt zur Antriebsachse angeordnet sein und die Stellachse mittels einer Über- oder Untersetzung über die Antriebsachse in einem so bestimmten Übersetzungsverhältnis antreibbar sein.

Eine weitere Ausführungsform der Erfindung betrifft das Zusammenwirken von Führungsmechanik und Ventilstange. Das Kontaktelement und das Stellelement wirken hierbei derart zusammen, dass das Kontaktelement direkt die äussere Spur des Stellelements kontaktiert (also ohne ein zwischengeschaltetes Führungselement wie die genannte Führungsplatte) und eine lineare Bewegung des Kontaktelements entlang der Bewegungsachse mittels einer Drehbewegung des Stellelements bereitstellbar ist. Hierbei kann das Kontaktelement mit einer Kraft entgegen der Flächennormalen im jeweiligen Kontaktpunkt mit dem Stellelement beaufschlagt sein und dadurch auf das Stellelement gedrückt werden. Eine solche Vorspannung kann z.B. mittels einer gespannten Feder bereitgestellt sein.

Mit anderen Worten, das z.B. als Zapfen ausgebildete Kontaktelement und das Stellelement können für die Erzeugung einer Bewegung des Ventilteils in Kontakt stehen und durch eine Drehung des Stellelements wird der Zapfen durch den sich dabei ändernden Abstand der Flächenbegrenzung des Stellelements zur Antriebsachse in eine Richtung weg von oder hin zu der Stellachse bewegt (der Zapfen ist hierfür insbesondere z.B. mittels einer an dem Ventilteil angeordneten Feder in eine solche Kontaktposition vorgespannt). Dadurch wird eine ebensolche Bewegung des Ventilteils bewirkt und der Fliessweg somit gesteuert abschliessbar bzw. (teilweise) zu öffnen.

Entsprechend einer weiteren Ausführungsform kann das Ventilteil derart vorgespannt sein, dass in einer Geschlossenwinkelstellung des Stellelements maximal eine Gegenkraft kleiner als eine so bewirkte Vorspannkraft auf das Kontaktelement ausgeübt wird und die Verschlussfläche des Ventilteils dabei mit dem Ventilsitz in Kontakt stehend vorliegt. Durch ein Drehen des Stellelements um die Stellachse um einen definierten Drehwinkel kann dann eine Offenwinkelstellung des Stellelements einstellbar sein, in welcher eine Kraft auf das Kontaktelement entgegen der und grösser als die Vorspannkraft ausgeübt wird und die Verschlussfläche des Ventilteils und der Ventilsitz dann ausser Kontakt stehen, der Fliessweg somit nicht unterbrochen ist.

Das Ventilgehäuse kann des Weitern eine Durchtrittsöffnung aufweisen, wobei die Ventilstange durch die Durchtrittsöffnung sich hindurch erstreckend angeordnet und ausgestaltet ist und das Kontaktelement ausserhalb des Ventilgehäuses vorliegt. Hierdurch kann der Übertrittsbereich zwischen dem Ventilinneren und dem Äusseren sehr klein und damit wenig anfällig für eintretende Verunreinigungen gehalten werden. Zudem, da das Kontaktelement, welches ein Verbindungsstück zu der Antriebsmechanik darstellt, ausserhalb des Gehäuses vorliegt kann so ein Austausch der Antriebskomponenten sehr einfach und ohne Eingriff in das Ventilinneren bzw. in ein Prozessvolumen erfolgen. Dabei ist lediglich ein mechanisches Trennen des Kontaktelements von der Führungsmechanik zu vollziehen. Dies kann insbesondere durch ein einfaches Lösen des Zapfens (Bolzens) geschehen.

Bezüglich der Ausgestaltung des Kontaktelements ist derartige Umsetzung realisierbar, dass eine an einem Ende der Ventilstange vorgesehene Kontaktfläche das Kontaktelement verkörpert. Alternativ kann das Kontaktelement als Verbindungszapfen ausgebildet sein, welcher mechanisch mit der Führungsmechanik, insbesondere mit dem Führungselement, verbunden ist.

Die erfindungsgemässe Vorrichtung wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine erste Ausführungsform für ein Eckventil mit einer Antriebseinheit gemäss der Erfindung;
- Figs. 2a-b: eine weitere Ausführungsform des erfindungsgemässen Eckventils mit motorisierter Antriebseinheit in einem Querschnitt; und
- Figs. 3a-b: eine weitere Ausführungsform eines Ventils gemäss der Erfindung in einer Geschlossenstellung und einer Offenstellung im Längsschnitt.

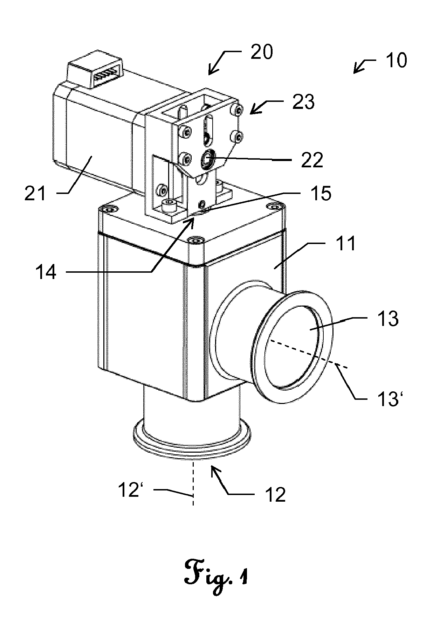

Figur 1 zeigt ein Ventil 10 ausgebildet als Eckventil mit einer Antriebseinheit 20 gemäss der Erfindung.

Das Eckventil 10 weist ein Ventilgehäuse 11 mit einem ersten Anschluss 12 und einem zweiten Anschluss 13 auf. Die Anschlüsse 12,13 sind im Wesentlichen orthogonal zueinander ausgerichtet. Der erste Anschluss 12 definiert entsprechend eine erste Achse 12' und der zweite Anschluss 13 eine zweite Achse 13', wobei diese Achsen 12',13' ebenfalls entsprechend orthogonal relativ zueinander stehen. Ein Achsenschnittpunkt liegt im Inneren des Gehäuses 11.

Mit den beiden Anschlüssen 12,13 ist ein Fliessweg für ein Medium oder Fluid definiert, welcher sich durch das Gehäuse 11 erstreckt und welcher mittels des Ventils 10 unterbrochen bzw. freigegeben werden kann.

Die Antriebseinheit 20 verfügt über einen steuerbaren Motor 21, dessen Antriebswelle 22 mittels einer Antriebsmechanik 23 (Führungsmechanik) mit einer Schliesskomponente des Ventils 10 in struktureller Verbindung steht.

Innerhalb des Ventilgehäuses 11 ist ein bewegliches Ventilteil angeordnet, das eine Verschlussfläche besitzt, mittels welcher bei einem Kontaktieren eines gehäuseseitigen Ventilsitzes ein gasdichtes Unterbrechen des Fliessweges bereitstellbar ist. Dieses Ventilteil kann beispielsweise als Kolben mit einem Balg ausgebildet sein. An das Ventilteil schliesst eine Ventilstange 15 an. Das Gehäuse 11 verfügt über eine abgedichtete oberseitige Durchtrittsöffnung 14 durch die die Ventilstange 15 geführt ist. An der Ventilstange 15 ist ferner ein Kontaktelement, z.B. ein Zapfen oder Bolzen, angeordnet, welches in mittelbarem mechanischem Kontakt mit der Antriebsachse 22 des Motors 21 steht (mittels der Führungsmechanik 23). Durch eine Drehung der Antriebsachse 22 ist somit eine im Wesentlichen lineare Bewegung der Ventilstange 15 umsetzbar.

Zum Schutz vor allfälligen Umwelteinflüssen (Eindringen von Partikeln oder Feuchtigkeit in die Mechanik) kann die Führungsmechanik 23 oder auch diese Mechanik 23 zusammen mit dem Motor 21 zusätzlich eingehaust werden, sodass letztlich allein ein zur Ansteuerung des Motors 21 vorgesehenes Verbindungskabel durch eine solche Einhausung geführt wäre. Durch diese Einkapselung kann eine negative Einwirkung von störenden Umwelteinflüssen verringert bzw. gänzlich vermieden werden.

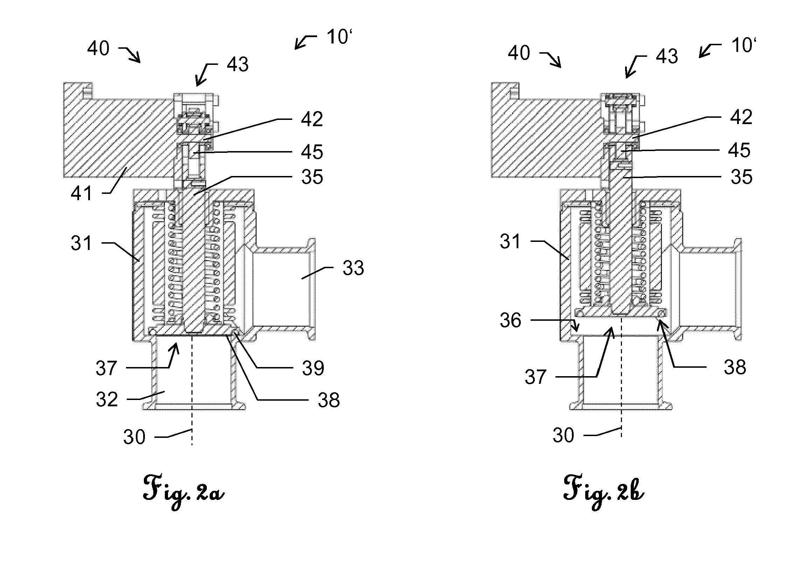

Die Figuren 2a und 2b zeigen eine Ausführungsform des erfindungsgemässen Eckventils 10' mit motorisierter Antriebseinheit 40 in einem Querschnitt. Figur 2a zeigt einen geschlossenen Zustand des Ventils 10' und Figur 2b eine geöffneten Zustand.

In dem geschlossenen Zustand steht eine Verschlussfläche 38 eines inneren Ventilteils 37 mit dem Ventilsitz 36 des Gehäuses 31 in Kontakt. Das Ventilteil 37 bzw. die Verschlussfläche 38 weist zudem ein Dichtmaterial 39, z.B. einen aus Fluorpolymer gefertigten O-Ring, auf, welches entsprechend der Form des korrespondierenden Ventilsitzes 36 angeordnet, insbesondere angeformt, ist.

Der Ventilsitz 36 ist um den ersten Anschluss 32 des Ventils 10' angeordnet. Der zweite Anschluss 33 des Eckventils 10' ist orthogonal zu diesem ausgerichtet.

Durch eine Bewegung des Ventilteils 37 entlang einer Bewegungsachse 30, welche insbesondere parallel oder koaxial zu der durch den ersten Anschluss 32 definierten ersten Achse steht, also dieser insbesondere entspricht, kann das Ventil 10' geöffnet bzw. geschlossen werden. Der Fliessweg durch das Ventil 10' kann somit unterbrochen oder freigegeben werden.

Das Ventilteil 37 ist hier wie gegeigt als ein Kolben mit einem Balg ausgebildet, welcher in dem Ventilgehäuse 31 im Wesentlichen axial entlang der Bewegungsachse 30 verschiebbar ist. Der Kolben kann mittels einer Feder mit einer Kraft derart beaufschlagt sein, dass der Kolben in Richtung des Ventilsitzes 36 gedrückt wird und allein durch die so aufgebrachte Federkraft für einen gasdichten Verschluss des Ventils 10' sorgt. Der Balg ist hierbei derart ausgebildet, dass nur sein oberer und sein unterer Teil gefaltete strukturiert ist, jedoch der Mittelteil mit einer glatten Mantelfläche gefertigt ist. Dadurch kann eine signifikante Verringerung einer möglichen Rektionsfläche (für ein durchströmendes Prozessmedium) erzielt werden.

Eine Ventilstange 35 ragt an einer dem ersten Anschluss 33 gegenüberliegenden Seite des Gehäuses 11 aus diesem hinaus. An der hierfür vorgesehen Durchtrittsöffnung sind entsprechend Dichtkomponenten vorgesehen, damit eine Abdichtung des Ventilinnenraums gegenüber der Umgebung auch bei einer Bewegung der Ventilstange 35 gewährleistet ist. Durch eine solche Gestaltung kann eine Schnittstelle für den Ventilantrieb, d.h. ein Übergang zwischen dem Innenraum des Ventils und der Umwelt, sehr klein gehalten werden, sodass zum einen die Wahrscheinlichkeit einer Verunreinigung der Antriebsmechanik im Ventilgehäuse und des Prozessvolumens deutlich verbessert, d.h. verringert, werden kann. Des Weiteren bietet eine solche Lösung eine sehr einfache Austauschbarkeit der äusseren Antriebsmechanik, d.h. der Antriebseinheit, z.B. im Fall eines Defekts. Hierzu ist keinerlei Eingriff in das Ventilinnere bzw. das Prozessvolumen nötig, wodurch ein Produktionsprozess bei einem solchen Austausch nicht bzw. nur geringfügig beeinflusst wird.

Die Ventilstange 15 erstreckt sich hinzu einer Führungsmechanik 43, die zur gesteuerten Bewegung der Ventilstange 15 und damit des gesamten Ventilteils 37 ausgebildet und angeordnet ist. Die Führungsmechanik 43 weist ein Stellelement 45 auf, welches mit einer Antriebswelle 42 des Motors 41 der Antriebseinheit 40 verbunden ist.

In Abhängigkeit einer Drehstellung des Stellelements 45 kann die Stellung des Ventilteils 37 entlang der Bewegungsachse 30 definiert und ggf. verändert werden. Mit anderen Worten: durch die Ausgestaltung und die relative Anordnung der Führungsmechanik 43 relativ zur Ventilstange wird eine Drehbewegung des Stellelements 45 in eine Linearbewegung der Ventilstange 35 bzw. des Ventilteils 37 übersetzt.

Wie in Figur 2b zu sehen ist, ist der Fliessweg in dem gezeigten geöffneten Zustand des Ventils 10' freigegeben, d.h. ein Medium (z.B. Gas) oder ein Fluid kann von einem der beiden Anschlüsse 32 und 33 zum anderen strömen. Die Offenstellung wird bewirkt durch eine entgegen der Federkraft aufgebrachte Kraft, was zu einer Kompression der Feder führt. Die Gegenkraft ist durch die Antriebeinheit 40, insbesondere durch eine definierte Winkelstellung des Stellelements 45, gesteuert einstellbar und veränderbar.

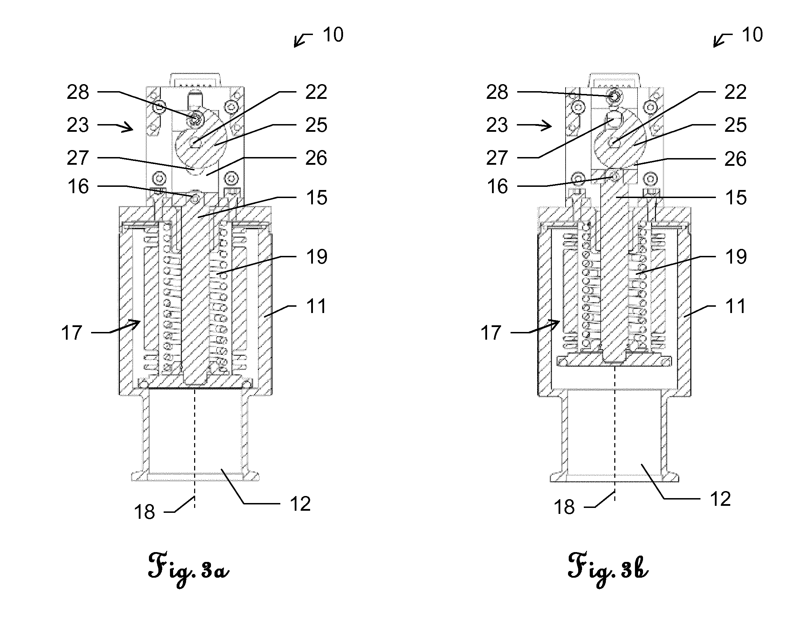

Eine Funktionsweise und ein Zusammenspiel der Führungsmechanik 43 mit der Ventilstange 35 werden beispielhaft in Zusammenhang mit einer Ausführungsform gemäss den Figuren 3a und 3b beschrieben.

Die Figur 3a zeigt eine Ausführungsform eines Ventils 10 gemäss der Erfindung in einer Geschlossenstellung und die Figur 3b das Ventil 10 in einer Offenstellung. Gezeigt ist ein Eckventil 10 im Wesentlichen gemäss Figur 1 in einem Längsschnitt.

In einem Ventilgehäuse 11 ist ein im Wesentlichen entlang der Bewegungsachse 18 bewegliches Ventilteil 17 angeordnet. Durch ein In-Kontakt-Bringen der Verschlussfläche des Ventilteils 17 mit dem Ventilsitz, der sich um den Anschluss 12 erstreckend ausgebildet ist, ist ein Unterbrechen eines durch das Gehäuse 11 führenden Fliessweges bereitstellbar. Vorzugsweise weist hierfür entweder der Ventilsitz oder die Verschlussfläche eine aus zumindest teilweise elastischem Material gefertigte Dichtung, z.B. aus Elastomer, auf.

Das Ventil 10 weist zudem eine Feder 19 auf, welche zwischen dem Ventilgehäuse 11 und dem Ventilteil 17 vorgespannt vorliegt und somit eine Kraft in Richtung des Anschlusses 12 verursacht. In der gezeigten Ausführung ist die Feder 19 konzentrisch um eine Ventilstange 15 angeordnet. Die Erfindung ist jedoch nicht auf eine solche Anordnung oder generell auf die Vorsehung einer Feder 19 beschränkt, sondern umfasst auch Ausführungsformen mit einer alternativen Federanordnung, z.B. parallel zur Ventilstange 15, oder mit einer alternativen Komponente zur Aufbringung einer entsprechenden Vorspannkraft, z.B. eine elastisch komprimierbare Komponente.

Die Ventilstange 15 ist durch eine Gehäuseseite geführt, hier die Oberseite. Zwischen der Ventilstange 15 und der Gehäusewand der Oberseite ist ein Dichtmaterial vorgesehen um zum einen einen Mediumaustausch zwischen dem Ventilinneren und der äusseren Umgebung zu verhindern und zum anderen ein Eindringen von Verunreinigungen (Schmutz, Partikelrückstände etc.) in den Ventilkörper zu vermeiden. In der gezeigten Ausführungsform weist die Ventilstange 15 ein Kontaktelement 16 in Form eines Zapfens bzw. Bolzens auf. Das Kontaktelement kann alternativ (nicht gezeigt) durch eine Endseite der Ventilstange 15, durch eine spezifisch ausgestaltete Kontaktfläche oder eine ähnliche Komponente zur Herstellung einer mechanischen Verbindung mit einer Führungsmechanik 23 gebildet sein. Das Kontaktelement 16 ist zum Zweck einer Bereitstellung einer Verbindung des Ventilteils 17 mit der Antriebseinheit vorgesehen. Dadurch ist eine gesteuerte Bewegung oder Stellung des Ventilteils 17 vermittels der Antriebseinheit ermöglicht.

Die Antriebseinheit weist die Führungsmechanik 23 auf, welche mit einer Antriebswelle 22 (Antriebsachse) der Antriebseinheit bzw. eines Motors verbunden ist. Eine Drehbewegung der Welle 22 kann mittels der Mechanik 23 in gewünschter Weise weiter transportiert und transformiert werden.

Die Führungsmechanik 23 weist in der hier gezeigten Ausführungsform ein Stellelement 26 auf, das direkt mit der Antriebsachse 22 verbunden ist. Eine Drehung der Achse 22 bedeutet somit eine winkelgleiche Drehung des Stellelements 26. Die Antriebsachse 22 verkörpert somit eine Stellachse, um welche das Stellelement drehbar gelagert ist. Es versteht sich, dass die Erfindung in diesem Aspekt nicht auf hier gezeigte Ausführung beschränkt ist, sondern alternative Verbindungen zwischen Welle 22 und Stellelement 25 ebenso von der Erfindung umfasst sind, beispielsweise eine Verbindung mit einer Übersetzung z.B. mittels Ritzeln unterschiedlicher Durchmesser, wobei die Antriebsachse 22 und eine Stellachse der Führungsmechanik 23 parallel versetz sind.

Das Stellelement 25 ist wie gezeigt als eine flache Kurvenscheibe ausgebildet. Diese Kurvenscheibe ist schneckenförmig bzw. bezüglich ihrer äusseren Begrenzungslinie spiralförmig ausgebildet. Der Abstand der äusseren Spur, also der Konturlinie, des Stellelements 25 zur Stellachse (hier: Antriebsachse 22) ist bezügliche eines relativen Referenzwinkels, also beispielsweise bezüglich einer Stellung relativ zur Bewegungsachse, abhängig von der Drehstellung des Stellelements 25 oder einer Änderung dieser Stellung. Mit anderen Worten: betrachtet man eine fixe Linie von Stellachse zum ersten Anschluss (z.B. Bewegungsachse) so ändert sich der Abstand zwischen der Stellachse und dem Rand des Stellelements 25 mit einer Drehung des Stellelements 25.

Das Stellelement 25 kann alternativ (nicht gezeigt) eine andere Form als dargestellt aufweisen. Eine solche alternative Form stellt jedoch immer noch einen mit der Drehung des Stellelements 25 veränderlichen Abstand zwischen der äusseren Spur und der Stellachse bereit. Beispielsweise kann das Stellelement eine Art Kartoffelform oder eine elliptische Form aufweisen. Bevorzugt ist das Element 25 dann exzentrisch, z.B. in einem der beiden Ellipsenbrennpunkte, gelagert.

Zudem verfügt die Führungsmechanik 23 über ein Führungselement 26. Das Führungselement 26 ist hier als zumindest eine im Wesentlichen rechteckförmige Platte, insbesondere als zwei das Stellelement 25 an zwei gegenüberliegenden Seiten fassende Platten, mit einer länglichen Ausnehmung 27 ausgeführt. Das Führungselement 26 weist ferner einen Steg 28 auf, welcher mit dem Stellelement 25 in Kontakt steht und auf welchen eine Bewegung des Stellelements 25 entsprechend übertragen wird. Die Antriebsachse 22 ist mit dem Führungselement 26 so angeordnet, dass die Ausnehmung 27 die Antriebsachse 22 umläuft. Das Führungselement 26 ist somit entsprechend der inneren Begrenzung seiner Ausnehmung 27 relativ zu der Antriebsachse 22 bewegbar. In der gezeigten Ausführung ist eine lineare Bewegung des Führungselements 26 parallel zur Bewegungsachse 18 möglich.

In Figur 3a ist das Ventilsystem 10 geschlossen gezeigt. Der Führungssteg 28 liegt in einer Art Bucht des Stellelements 25 vor. Diese Stellung kann als Ruhestellung angesehen werden. Der Steg 28 hat hierbei seine bezüglich einer Linearbewegung in Richtung des Anschlusses 12 niedrigst mögliche Position eingenommen. Dies aufgrund des hierbei vorliegenden geringsten Abstands zwischen der Stellachse und der äusseren Spur des Stellelements 25. Die Komponenten des Ventils 10 sind hinsichtlich ihrer Dimensionierungen und relativen Anordnungen so aufeinander abgestimmt, dass in dieser Ruheposition die Verschlussfläche des Ventilteils 17 auf den Ventilsitz (mittels der Feder) gedrückt ist. Durch die Verbindung des Stegs 28 mit dem Führungselement 26, d.h. der Platte, liegt auch dieses in seiner tiefsten Stellung vor.

Das Kontaktelement 16 ist in dieser Ausführungsform fest mit dem Führungselement 26 verbunden, d.h. eine auf das Führungselement 26 ausgeübte Kraft wird ebenso auf das Kontaktelement 16 und somit auf die Ventilstange 15 übertragen.

Figur 3b zeigt das Ventil 10 geöffnet. Die Verschlussfläche steht nicht mit dem Ventilsitz in Kontakt.

In Vergleich zum Zustand gemäss Figur 3a ist das Stellelement 25 hier um 360° im Urzeigersinn gedreht. Durch diese Drehung wird der Führungssteg 28 während der Drehung in eine Bewegungsrichtung weg von dem Anschluss 12 bewegt. Dies wird bewirkt durch den dabei zunehmenden Abstand der äusseren Spur des Stellelements 25 zur Antriebsachse in Richtung des Stegs 28.

Die Bewegungsgeschwindigkeit des Stegs 28 hängt hierbei von der Steigung der durch die Form des Stellelements 25 definierten Kurve und der Drehgeschwindigkeit der definierten Antriebswelle 22 ab.

Durch die mechanische Verbindung der Führungsplatte 26 mit der Ventilstange 15 (mittels des Kontaktelements 16) wird also durch besagte Drehbewegung des Stellelements 25 eine Kraft (in der Abbildung nach oben) auf den Steg 28 ausgeübt und diese aufgrund der spezifischen Ausgestaltung der Führungsmechanik 23 in eine lineare Bewegung (des Stegs 28, des Führungselements 26, der Ventilstange 15 und des gesamten Ventilteils 17) in diese Richtung übersetzt. Der Kolben 17 wird also entgegen der Federkraft nach oben gezogen.

Hierbei wird das Führungselement 26 aufgrund seiner durch die Ausnehmung 27 gebildeten Kulisse um die Antriebsachse 22 im Rahmen des im Wesentlichen einzig verbleibenden Freiheitsgrads linear entlang der Bewegungsachse 18 bewegt.

Mit der beschriebenen Ausführungsform kann somit auch eine sehr präzise Stellung des Ventilteils 17 in dem Ventilgehäuse 11 bewirkt und gehalten werden, dies insbesondere durch eine definierte Stellwinkeländerung für das Stellelement 25, die insbesondere sämtliche Winkelstellungen zwischen α = 0° (entspricht der Ruheposition) und β = 360° (entspricht der gezeigten maximal geöffneten Stellung) verkörpern kann. Insbesondere in Abhängigkeit der Form des Stellelements kann eine solche Drehwinkeländerung auch mehr als 360° betragen.

Es ist also möglich jede beliebige Offenstellung zwischen der Geschlossenstellung (Fig. 3a) und der maximalen Öffnung (Fig. 3b) und damit einen definierten Volumenstrom für den Fliessweg, also jede Zwischenstellung, einzustellen. Zudem kann dies voll automatisch durch eine entsprechende Ansteuerung der Antriebseinheit und dementsprechend sehr genau erfolgen. Ferner kann das Öffnen oder Schliessen (durch Drehung des Stellelements 25 entgegen dem Urzeigersinn) des Ventils 10 durch die Steuerbarkeit vergleichsweise schnell und zeitlich Abgestimmt auf einen Produktionsprozess erfolgen.

Gemäss einer weiteren, nicht gezeigten Ausführungsform kann das Ventilteil mittels z.B. einer Zugfeder so mit einer Kraft beaufschlagt sein, dass die Zugkraft in eine Richtung wirkt, die - ohne wirkende Gegenkraft - ein ausser Kontakt treten der Verschlussseite von dem Ventilsitz bewirkt. Die Führungsmechanik ist hierbei dann so ausgestaltet, dass zum Verschliessen des Ventils eine Gegenkraft mittels Drehen des Stellelements erzeugt wird. Das Stellelement liegt in einem solchen Geschlossenzustand dann z.B. um 180° gedreht relativ zur vorangehenden Ausführungsform vor. In einer solchen Ausführung genügt als Kontaktelement eine blosse Kontaktfläche seitens der Ventilstange und auch seitens des Führungselements, da die Ventilstange durch die Federkraft stets auf das Führungselement gedrückt wird.

Es versteht sich, dass die dargestellten Figuren nur mögliche Ausführungsbeispiele schematisch darstellen. Die verschiedenen Ansätze können erfindungsgemäss ebenso miteinander sowie mit Vorrichtungen zum Verschliessen von Prozessvolumina unter Vakuumbedingungen des Stands der Technik kombiniert werden.

## Patentansprüche

1. Ventil (10,10') zum im Wesentlichen gasdichten Unterbrechen eines Fliesswegs, mit
• einem Ventilgehäuse (11,31), das
□ einen ersten Anschluss (12,32) in Richtung einer ersten Achse (12'),
□ einen zweiten Anschluss (13) in Richtung einer im Wesentlichen orthogonal zu der ersten Achse (12') verlaufenden zweiten Achse (13') und
□ einen Ventilsitz (36), welcher den ersten Anschluss (12) umschliesst und in dem Fliessweg eines Fliessraums, der den ersten Anschluss (12) und den zweiten Anschluss (13) miteinander verbindet, angeordnet ist,
aufweist,
• einem Ventilteil (17,37), das zumindest teilweise innerhalb des Fliessraums entlang einer im Wesentlichen der ersten Achse (12') entsprechenden Bewegungsachse (18,30) senkrecht zu einer Fläche des Ventilsitzes (36) um einen Verstellweg derart axial geführt verschiebbar ist, dass eine dem Ventilsitz (36) zugewandte, insbesondere ein Dichtmaterial (39) aufweisende, Verschlussfläche (38) des Ventilteils (17,37) zum im Wesentlichen gasdichten Unterbrechen des Fliesswegs mit dem Ventilsitz (36) in Kontakt bringbar und zum Freigeben des Fliesswegs ausser Kontakt bringbar ist, und
• einer motorisierten Antriebseinheit (20,40) zur Bereitstellung einer gesteuerten Verschiebung des Ventilteils (17,37) entlang der Bewegungsachse (18, 30),
**dadurch gekennzeichnet, dass**
• das Ventilteil (17,37) eine Ventilstange (15,35) mit einem Kontaktelement (16) aufweist,
• die Antriebseinheit (20,40) eine Führungsmechanik (23,43) mit einem um eine Stellachse drehbar gelagerten Stellelement (25,45) aufweist, wobei das Stellelement (25,45)
□ gesteuert motorisiert um die Stellsachse drehbar angeordnet ist und
□ durch seine Form eine äussere Spur definiert, deren Abstand zur Stellachse in einem bestimmten Drehwinkelbereich variiert,
• der Abstand der Spur zur Stellachse bezüglich eines bestimmten Referenzwinkels um die Stellsachse durch eine Drehung des Stellelements (25) in eine bestimmte Drehwinkelstellung um die Stellachse einstellbar ist und
• die Antriebseinheit (20,40) und das Ventilteil (17,37) derart relativ zueinander angeordnet sind, dass das Kontaktelement (16) der Ventilstange (15,35) und die Führungsmechanik (23,43) der Antriebseinheit (20,40) derart zusammenwirken, dass mittels einer Drehung des Stellelements (25) um die Stellachse das Ventilteil (17,37) so bewegbar ist, dass dadurch das Unterbrechen bzw. das Freigeben des Fliesswegs bereitstellbar ist.

2. Ventil (10,10') nach Anspruch 1,
**dadurch gekennzeichnet, dass**
bei der Drehung des Stellelements (25) die Drehbewegung des Stellelements (25) in eine Linearbewegung des Ventilteils (17,37) transformiert wird.

3. Ventil (10,10') nach Anspruch 1 oder 2,
**dadurch gekennzeichnet, dass**
die Führungsmechanik (23,43) ein Führungselement (26) aufweist, welches derart ausgebildet und relativ zum Stellelement (25) angeordnet ist, dass eine Drehbewegung des Stellelements (25) in eine Linearbewegung des Führungselements (26) transformiert wird.

4. Ventil (10,10') nach Anspruch 3,
**dadurch gekennzeichnet, dass**
das Führungselement (26) eine Kulisse (27) aufweist, wobei die Kulisse (27) die Stellachse umläuft, und das Führungselement (26) zusammen mit dem Stellelement (25) einen Kulissenantrieb um die Stellachse bildet.

5. Ventil (10,10') nach Anspruch 3 oder 4,
**dadurch gekennzeichnet, dass**
das Führungselement (26) als zumindest eine Führungsplatte mit einer die Kulisse verkörpernden länglichen Ausnehmung (27) und einem mit dem Stellelement (25) mechanisch zusammenwirkenden Führungssteg (28) ausgebildet ist.

6. Ventil (10,10') nach einem der Ansprüche 1 bis 5,
**dadurch gekennzeichnet, dass**
die Spur bezüglich des Referenzwinkels einen drehwinkelabhängigen Abstand der Stellachse zu einer Kante des Stellelements (25) definiert.

7. Ventil (10,10') nach einem der Ansprüche 1 bis 6,
**dadurch gekennzeichnet, dass**
die Spur zumindest teilweise ein definierte Steigung aufweist, insbesondere wobei der Abstand der Spur zur Stellachse bezüglich gleicher Drehwinkelbereiche gleich stark variiert.

8. Ventil (10,10') nach einem der Ansprüche 1 bis 7,
**dadurch gekennzeichnet, dass**
der Abstand für eine erste Drehwinkelstellung (α) minimal ist und der Abstand für eine zweite Drehwinkelstellung (β) maximal ist, wobei zwischen erster und zweiter Drehwinkelstellung ein Drehwinkelunterschied von mindestens 90°, insbesondere mindestens 180° oder mindestens 360°, besteht.

9. Ventil (10,10') nach einem der Ansprüche 1 bis 8,
**dadurch gekennzeichnet, dass**
das Stellelement (25) als Kurvenscheibe ausgebildet ist, wobei deren Oberflächenbegrenzungslinien zumindest teilweise einen bezüglich einer Drehung der Kurvenscheibe in eine erste Drehrichtung um die Stellachse im Wesentlichen zunehmenden Abstand zu der Stellachse beschreibt.

10. Ventil (10,10') nach einem der Ansprüche 1 bis 9,
**dadurch gekennzeichnet, dass**
die äussere Spur zumindest teilweise spiralmässig verläuft und sich über einen Drehwinkelbereich von zumindest, insbesondere mehr als, 360° erstreckt.

11. Ventil (10,10') nach einem der Ansprüche 1 bis 10,
**dadurch gekennzeichnet, dass**
die Stellachse durch eine Antriebsachse (22) der Antriebseinheit (20,40) verkörpert ist und das Stellelement (25) um die Antriebsachse (22) drehbar gelagert ist.

12. Ventil (10,10') nach einem der Ansprüche 1 bis 11,
**dadurch gekennzeichnet, dass**
das Kontaktelement (16) und das Stellelement (25) derart zusammenwirken, dass das Kontaktelement (16) die äussere Spur des Stellelements (25) kontaktiert und eine lineare Bewegung des Kontaktelements (16) entlang der Bewegungsachse (18,30) mittels einer Drehbewegung des Stellelements (25) bereitstellbar ist, insbesondere wobei das Kontaktelement (16) mit einer Kraft entgegen der Flächennormalen im jeweiligen Kontaktpunkt mit dem Stellelement (25) beaufschlagt ist und dadurch auf das Stellelement (25) gedrückt wird.

13. Ventil (10,10') nach einem der Ansprüche 1 bis 12,
**dadurch gekennzeichnet, dass**
• das Ventilteil (17,37) derart vorgespannt ist, dass in einer Geschlossenwinkelstellung des Stellelements (25) maximal eine Gegenkraft kleiner als eine bewirkte Vorspannkraft auf das Kontaktelement (16) ausgeübt wird und die Verschlussfläche (38) des Ventilteils (17,37) mit dem Ventilsitz (36) in Kontakt stehend vorliegt, und
• durch ein Drehen des Stellelements (25) um die Stellachse um einen definierten Drehwinkel eine Offenwinkelstellung des Stellelements (25) einstellbar ist, in welcher
□ eine Kraft auf das Kontaktelement (16) entgegen der und grösser als die Vorspannkraft ausgeübt wird und
□ die Verschlussfläche (38) des Ventilteils (17,37) und der Ventilsitz (36) ausser Kontakt stehen.

14. Ventil (10,10') nach einem der Ansprüche 1 bis 13,
**dadurch gekennzeichnet, dass**
das Ventilgehäuse (11,31) eine Durchtrittsöffnung (14) aufweist, wobei die Ventilstange (15,35) durch die Durchtrittsöffnung (14) sich hindurch erstreckend angeordnet und ausgestaltet ist und das Kontaktelement (16) ausserhalb des Ventilgehäuses (11,31) vorliegt.

15. Ventil (10,10') nach einem der Ansprüche 1 bis 14,
**dadurch gekennzeichnet, dass**
das Kontaktelement (16)
• eine an einem Ende der Ventilstange (15,35) vorgesehene Kontaktfläche verkörpert oder
• als Verbindungszapfen ausgebildet ist, welcher mechanisch mit der Führungsmechanik (23,43), insbesondere mit dem Führungselement (26), verbunden ist.
